Europäisches Patentamt

(19) European Patent Office

Office européen des brevets

(11) Publication number: **0 278 893**
A2

## (12) EUROPEAN PATENT APPLICATION

(21) Application number: 88630025.0

(22) Date of filing: 09.02.88

(51) Int. Cl.⁴: **B 60 C 25/18**
F 16 K 51/00

(30) Priority: 10.02.87 AU 306/87

(43) Date of publication of application:
17.08.88 Bulletin 88/33

(84) Designated Contracting States:
AT BE CH DE ES FR GB GR IT LI LU NL SE

(71) Applicant: G.S.G.- SANFORD PTY.LTD.
24-26 Claremont Street
South Yarra Victoria 3144 (AU)

(72) Inventor: Shadwell, Philip Richard
38 Edinburgh Street
Hallam Victoria 3803 (AU)

(74) Representative: Weydert, Robert et al
OFFICE DENNEMEYER S.à.r.l. P.O. Box 1502
L-1015 Luxembourg (LU)

(54) Valve body removal and insertion.

(57) A valve body (10) includes a portion which may be deformed to allow it to be inserted into or removed from an aperture in a vehicle wheel rim. The body (10) has a flange (12) for attachment to a tyre inner tube, and an annular groove (18) between the flange (12) and the portion, which sealingly engages the edge of the aperture. A tool for inserting and removing the body consists of a first member (22) having a shaft (24) with valve body engaging means (28) at one end, and a second member (36) having a bore through which the shaft (24) extends. Relative movement of the two members (22,36) after engagement of the first member (22) with a valve body (10) effects deformatin of the portion of the body (10).

Fig. 1.

Fig. 2.

Fig. 3.

EP 0 278 893 A2

## Description

This invention relates to valves for pneumatic tyres, and to apparatus for inserting such valves into apertures in the wheel rims of vehicles.

Conventional pneumatic tyre arrangements for motor vehicles consist of a relatively solid outer casing, held within a wheel rim. An inflatable inner tube is located within the casing and rim, and is inflated through a valve which protrudes through an aperture in the rim.

It has been discovered that in the event of a puncture, unless the casing is severely damaged, most of the air escaping from the tube does not pass through the puncture hole in the casing, either because the cause of the puncture is still located therein, or doe to the inherent self-sealing nature of the material used in the casing.

Investigations have revealed that air escaping from the punctured inner tube flows between the outer surface of the tube and the inner surface of the casing, and escapes through the annular area between the valve body and the edge of the rim aperture. This is normally an easy path for the air to follow, and results in rapid deflation of the tyre. Rapid deflation is extremely serious, particularly if it occurs on a front when of a vehicle during cornering.

Many modern tyres are tubeless, the air being retained solely between the casing the the rim. In such arrangements, the valve body must form a seal with the edges of the rim aperture. Valve bodies specifically for use with tubeless tyres have been designed to be pressed into the rim apertures, to deform slightly to sealingly engage with the apertures, with the use of a lubricant to aid in the insertion.

Notwithstanding that many modern tyre arrangements are tubeless, a high proportion use a tube with a conventional valve body. Thus, where a tubeless arrangement without a tube will not normally rapidly deflate when punctured, a tubeless arrangement with an inner tube therein will rapidly deflate as described hereinbefore.

The invention provides a valve body for a wheel/tyre arrangement, at least portion of said body being deformable to allow insertion into and removal from an aperture in the rim of said wheel, said body being adapted to sealingly engage with said aperture.

The invention also provides a tool for inserting a valve body into and/or removing a valve body from an aperture, said tool including co-operating elements to deform at least a portion of said valve body to effect said insertion or removal.

The invention also provides a method for inserting a valve body into and/or removing a valve body from an aperture, including the steps of radially compressing at least a portion of said body, and inserting the body into or removing the body from said aperture.

A preferred embodiment of the invention, will be described in detail hereinafter with reference to the accompanying drawings, in which:-

Figure 1 is a vertical section through a valve body, according to one embodiment of the invention;

Figure 2 is a vertical section through one element of a valve body insertion and removal tool; and

Figure 3 is a vertical section through a second element of a valve body insertion and removal tool.

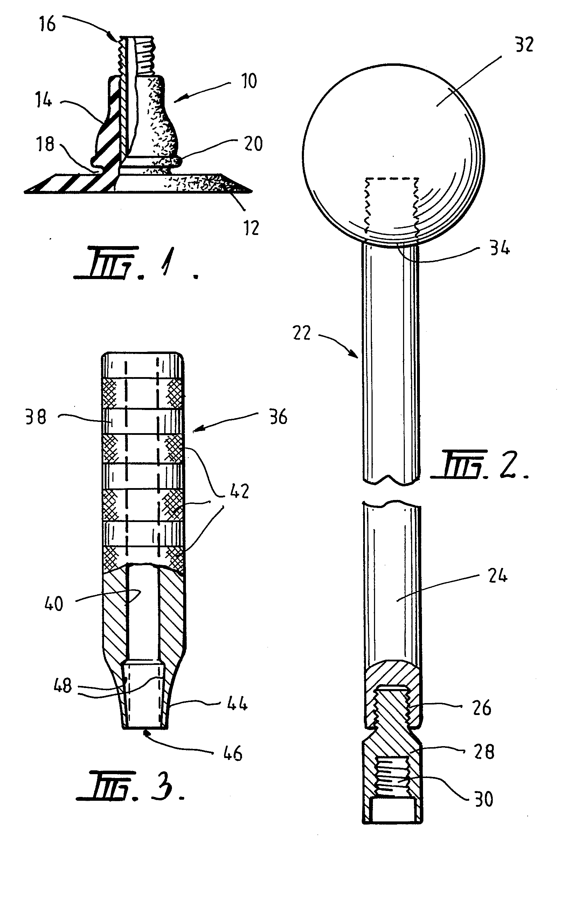

Referring firstly to Figure 1, the valve 10, which is for use in a motor vehicle wheel arrangement, consists of an annular base flange 12 surrounding the base of a body portion 14, within which a standard valve core 16 is located.

The body portion 14 generally increases in diameter as one nears base 12, but adjacent to base 12 there is provided an annular groove 18 which is intended to locate on the circular edge of an aperture a wheel rim. The groove is preferably formed on the body between annular rib 20 located on the upper edge of groove 18 and flange 12.

The valve body and flange are intended to be formed from a rubber-like or equivalent resilient material, which is capable of deforming to allow insertion and removal of the valve body 14 from a rim aperture, and to allow the flange 12 to be securely affixed to an inner tube, when desired.

Conventional tubeless valves remain in position in the wheel rim aperture. There is no need to remove them, unless they malfunction, as they are not connected to a tube which may need to be removed for repair. When such a valve is removed, it is destroyed in the operation, and cannot be re-used.

Tools of the general type of first element 22 of Figure 2 have been used to remove such valves. Element 22 consists of a shaft 24, preferably metal, with an internally-threaded first end 26 which is adapted to co-operate with the external thread of a component 28. Component 28 has an internal thread 30 which is adapted to engage the external thread of a conventional valve core. The other end 34 of shaft 24 has a knob 32 screwed thereon.

It can be seen that element 22 may be used to engage and remove a tubeless valve.

Element 36 of Figure 3 consists of a generally cylindrical body 38 with an axial bore 40 therethrough. The outside of body 38 is knurled at 42 to enable it to be gripped manually.

One end 44 of element 36 is externally tapered. Internally, although the entrance 46 to bore 40 is of the same diameter as bore 40, the internal walls 48 diverge for some distance from entrance 46. The deviation of walls 48 from the extension of the walls of bore 40 (shown in broken lines) is preferably of the order of 3°.

In use, element 22 is inserted into bore 40 of element 36, in the orientation shown in Figures 2 and 3, that is, with end 26 entering the 'top' entrance of bore 40. Element 22 is axially movable within bore 40.

To insert a valve arrangement such as 10 (Figure 1) into a wheel rim aperture, threaded portion 30 is screwed into the threaded portion of valve core 16.

Lubricant is then preferably applied to valve body 14. Element 36 is then moved in the direction of valve body 14, so that end 46 contacts the body. Further movement in the same direction causes radial deformation of the valve body material, to enable the rib 20 to enter the interior of end 46. In this radially compressed state, the rib 20 is able to pass through the aperture. The valve arrangement may then be pulled into place, the direction of element 36 is reversed, and the material of valve body 14 returns to its normal shape, causing sealing engagement between valve body 14 and/or groove 18 and the edge of the rim aperture.

It is believed that the effect of the element 36 on valve body 14 involves the spreading of lubricant on walls 48, which aids deformation of valve body 14.

To remove a valve, an identical operation is pursued, except, of course, that at the end the valve body 14 is pushed through the rim aperture.

It can be seen that the present invention provides means for sealing the valve body/rim aperture gap, thus preventing rapid deflation of the tyre of a vehicle, as well as permitting non-destructive insertion and removal of a valve arrangement.

Although the described embodiments refer to a passenger motor vehicle wheel and tyre, it is to be understood that it is applicable to all vehicle tyres, and to all appropriate pneumatic arrangements.

## Claims

1. A valve body (10) for a wheel/tyre arrangement, characterized in that at least portion of said body (10) is deformable to allow insertion into and removal from an aperture in the rim of said wheel, said body (10) being adapted to sealingly engage with said aperture.

2. A valve body (10) according to claim 1, characterized in that said body further includes a flange (12) for attachment to an inner tube, an annular groove (18) being located between said flange (12) and said portion, said groove (18), in use, effecting sealing engagement with said rim.

3. A valve body (10) according to claim 1 or claim 2, characterized in that the valve mechanism (16) extends from an upper portion of said body (10), above said deformable portion, there being a passage through said body which allows for the flow of air to and from said mechanism, and also permits temporary deformation of the material of said deformable portion into said passage.

4. A tool for inserting a valve body (10) into and/or removing a valve body (10) from an aperture, characterized in that said tool includes co-operating elements (22,36) to deform at least a portion of said valve body (10) to effect said insertion or removal.

5. A tool according to claim 4, characterized by a first element (22) consisting of a shaft (24) in an end of which is located a bore, the inner portion of which is internally threaded (30), the threaded portion (30) being adapted to engage a valve body (10), and a second element (36) including an axial bore (40) adapted to receive said shaft (24) in a sliding relationship, said second element (36) having a tapered end (44), the tapered end (44) having a gradually increasing diameter of said bore extending to an annular shoulder.

6. A method for inserting a valve body (10) into and/or removing a valve body (10) from an aperture, including the steps of radially compressing at least a portion of said body (10), and inserting the body into or removing the body from said aperture.

7. A method according to claim 6, wherein said deformation is effected by a tool which includes co-operating elements.

0278893

Fig. 1.

Fig. 2.

Fig. 3.